# EUROPEAN PATENT APPLICATION

(11) **EP 2 302 492 A2**
(43) Date of publication of application: **30.03.2011**
(21) Application number: 10157924.1
(22) Date of filing: 26.03.2010
(51) Int. Cl.: G06F 3/048

(54) **Method for providing GUI which generates gravity map to move pointer and display apparatus using the same**

(30) Priority: 23.09.2009 KR 20090090161
(71) Applicant: Samsung Electronics Co., Ltd., Suwon-si, Gyeonggi-do 442-742 (KR)
(72) Inventor: Kim, Yong-deok, Gyeonggi-do (KR); Lee, Hye-jeong, Seoul (KR); Choi, Sung-wook, Gyeonggi-do (KR); Kim, Yeun-bae, Gyeonggi-do (KR)
(74) Representative: Robinson, Ian Michael

(57) **Abstract**

A method for providing a graphical user interface (GUI) in which a pointer is controlled to move to a specific location if the pointer approaches an area at which a GUI element, capable of being selected by the pointer, is displayed on the GUI.

## Description

### CROSS-REFERENCE TO RELATED APPLICATIONS

This application claims priority from Korean Patent Application No. 10-2009-0090161 filed on September 23, 2009, in the Korean Intellectual Property Office, the disclosure of which is incorporated herein by reference in its entirety.

### BACKGROUND

### 1. Field

Apparatuses and methods consistent with the exemplary embodiments relate to a graphical user interface (GUI) and a display apparatus using the same, and more particularly, to a method for providing a GUI in which a user selects a desired GUI element using a pointer and a display apparatus using the same.

### 2. Description of the Related Art

A GUI which allows a user to select a GUI element, such as an icon or a menu, displayed on a display using a pointer has been widely used. To input a command in such a GUI environment, a user moves a pointer to a desired GUI element using an input device, such as a mouse or a touch pad, and presses a button of the mouse or touches the touch pad of the input device to input a command to execute an operation allocated to the GUI element on which the pointer is positioned.

However, manipulating a pointer to a desired GUI element using an input device may be inconvenient to a user. In addition, as the size of a display increases and the size of the GUI element decreases, the inconvenience of moving the pointer to the GUI element further increases.

Therefore, there is a need for methods enabling a user to more conveniently move a pointer to a desired GUI element.

### SUMMARY

According to the present invention there is provided an apparatus and method as set forth in the appended claims. Other features of the invention will be apparent from the dependent claims, and the description which follows.

Exemplary embodiments discussed below address at least the above problems and/or disadvantages and other disadvantages not described above. Also, the exemplary embodiments are not required to overcome the disadvantages described above, and an exemplary embodiment may not overcome any of the problems described above.

Exemplary embodiments provide a method for providing a GUI in which a map to be referred to automatically move a pointer into a GUI element is generated, and the movement of the pointer is controlled according to the generated map so that a user more conveniently moves the pointer into the GUI element, and a display apparatus using the same.

According to an exemplary aspect of an exemplary embodiment, there is provided a method for providing a GUI, including determining that a pointer approaches an area on a screen of a display at which a GUI element, capable of being selected by the pointer on a screen which is generated with reference to information received from outside, is displayed; and automatically moving the pointer to a specific location if the pointer approaches the area at which the GUI element is displayed.

The method may include detecting a GUI element selectable by the pointer displayed on the screen of the display; and generating a map of the display containing a location on the screen at which the GUI element is displayed, wherein the moving may automatically move the pointer to the specific location using the map if the pointer approaches the area at which the GUI element is displayed.

The detecting and generating may be performed when the screen displayed on the display is changed.

The detecting may scan the area of the screen displayed on the display using the pointer, and detect the GUI element selectable by the pointer.

The screen displayed on the display may include a web page, and the GUI element selectable by the pointer may include at least one of a hyperlink, a graphic button, and an input box.

The specific location may be a center of the area at which the GUI element is displayed.

The moving may be performed when the pointer approaches an area around the area at which the GUI element is displayed.

The GLTI element may be a first GLTI element and a second GUI element that are displayed on the screen, and if the pointer approaches an area around the area at which the first GUI element is displayed and an area around the area at which the second GUI element is displayed, the moving may automatically move the pointer to a specific location within one of the first GUI element and the second GUI element having a center that is closest to the pointer.

The method may further include, where the GUI element is a first GLTI element and a second GLTI element, enlarging and displaying an area, on which the pointer is positioned, if the pointer approaches an area around the area at which the first GLTI element is displayed and an area around the area at which the second GUI element is displayed.

A command for moving the pointer may be input according to movement of a pointing device in a three-dimensional space by a user.

According to an aspect of another exemplary embodiment, there is provided a display apparatus including a display; a GUI generation unit which generates a pointer and adds the pointer to a video to be displayed on the display; and a controlling unit which controls the GUI generation unit to move the pointer to a specific location when the pointer approaches an area on a screen of the display at which a GUI element, capable of being selected by the pointer on a screen which is generated with reference to information received from outside, is displayed.

The controlling unit may detect a GUI element selectable by the pointer displayed on the screen of the display, and generate a map of the display containing a location on screen at which the GUI element is displayed, and wherein if the pointer approaches the area on which the GUI element is displayed, the controlling unit may control the GUI generation unit to automatically move the pointer to the specific location using the map.

According to an aspect of another exemplary embodiment, there is provided a method for providing a GUI, including determining that a pointer approaches an area on a screen of a display at which a GUI element, capable of being selected by the pointer on the screen which is generated to perform a specific task, is displayed; and automatically moving the pointer to a specific location if the pointer approaches the area on which the GUI element is displayed.

The method may include detecting a GUI element selectable by the pointer displayed on the screen of the display; and generating a map of the display containing a location on the screen at which the GUI element is displayed, wherein the moving may automatically move the pointer to the specific location using the map if the pointer approaches the area at which the GUI element is displayed.

The detecting and generating may be performed when the screen displayed on the display is changed.

The detecting may scan the area of the screen displayed on the display using the pointer, and detect the GUI element selectable by the pointer.

The screen displayed on the display may include a web page, and the GUI element selectable by the pointer may include at least one of a hyperlink, a graphic button, and an input box.

The moving may be performed when the pointer approaches an area around the area at which the GUI element is displayed.

The GUI element may be a first GUI element and a second GUI element that are displayed on the screen, and if the pointer approaches an area around the area at which the first GUI element is displayed and an area around the area at which the second GUI element is displayed, the moving may automatically move the pointer to a specific location within one of the first GUI element and the second GUI element having a center that is closest to the pointer.

The method may further include, where the GUI element is a first GUI element and a second GUI element, enlarging and displaying an area, on which the pointer is positioned, if the pointer approaches an area around the area at which the first GUI element is displayed and an area around the area at which the second GUI element is displayed.

### BRIEF DESCRIPTION OF THE DRAWINGS

The above and/or other aspects will be more apparent by describing certain exemplary embodiments with reference to the accompanying drawings, in which:

FIG. 1 is a view illustrating a broadcast receiving system applicable to an exemplary embodiment;

FIGS. 2 and 3 are views showing the movement of the front side of a remote controller by a user according to an exemplary embodiment;

FIG. 4 is a block diagram illustrating an Internet Protocol television (IP-TV) and a remote controller according to an exemplary embodiment;

FIGS. 5 and 6 are views provided to explain a gravity map according to an exemplary embodiment;

FIG. 7 is a flowchart illustrating a method for providing a GUI for a web page using a pointer according to an exemplary embodiment;

FIGS. 8A to 8D are views provided to further explain the method for providing a GUI in FIG. 7;

FIGS. 9A and 9B are views provided to explain the process of enlarging an area on which a pointer is positioned when the pointer moves into an area around two GUI elements according to an exemplary embodiment; and

FIGS. 10A and 10B are views provided to explain the process of automatically moving a pointer towards the center of a GUI element having a shorter distance from the pointer when the pointer moves into an area around two GUI elements according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

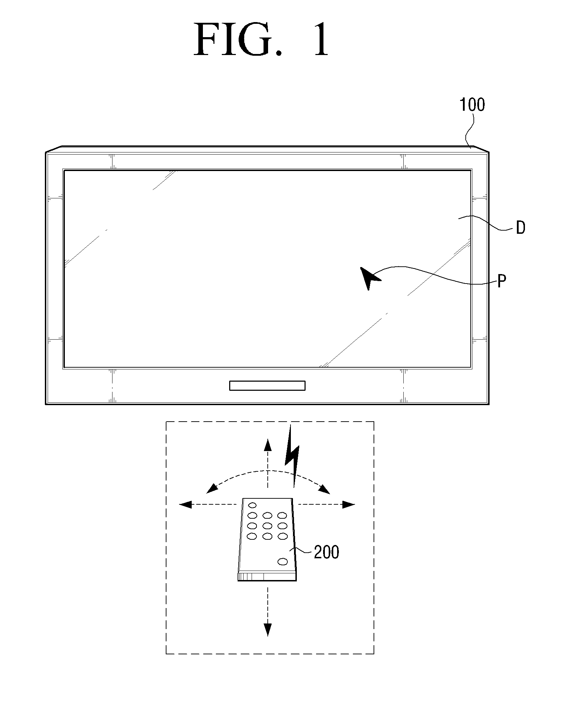

FIG. 1 is a view illustrating a broadcast receiving system applicable to an exemplary embodiment. Referring to FIG. 1, the broadcast receiving system is implemented using an IP-TV 100, which is a device that receives broadcasting and accesses the Internet, and a remote controller 200, which is a kind of user input device.

The IP-TV 100 provides a user with broadcasting received from a broadcasting source, for example over wire or wirelessly, on a display D. The IP-TV 100 may also provide a user with a web page received from a network, for example, via the Internet, on the display D.

The remote controller 200 is manipulated by a user and transmits signals representing the user's manipulation to the IP-TV 100. The IP-TV 100 performs operations in response to the signal representing the user's manipulation received from the remote controller 200. The remote controller 200 may also operate as a pointing device, which will be explained later in detail.

As shown by dotted arrows in FIG. 1, the remote controller 200 can be moved by a user in three-dimensional space. The remote controller 200 may move up, down, left, right, or in a combined direction (for example, in an upper-left direction). That is, the front of the remote controller 200 can move in any direction.

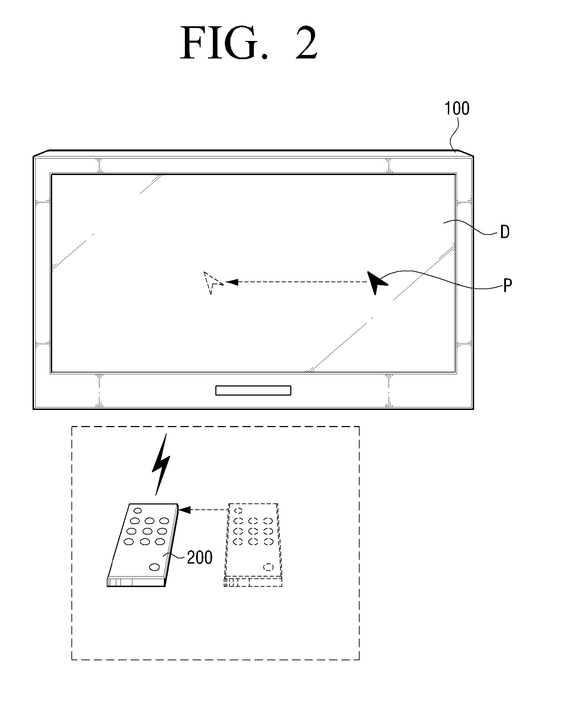

For example, a user may move the front of the remote controller 200 by drawing a locus on a virtual surface which is in parallel with a screen of the display D. FIG. 2 illustrates the remote controller 200, which is moved in a left direction, while drawing a locus on a virtual surface parallel with the screen of the display D.

A user may move the front of the remote controller 200 by rotating his or her wrist without moving his or her arm.

If a user rotates his or her wrist up, down, left, right, or in a combined direction (for example, in an upper-left direction), the front of the remote controller 200 may be moved up, down, left, right, or in a combined direction (for example, in an upper-left direction) while drawing a curved locus on a virtual hemisphere surface.

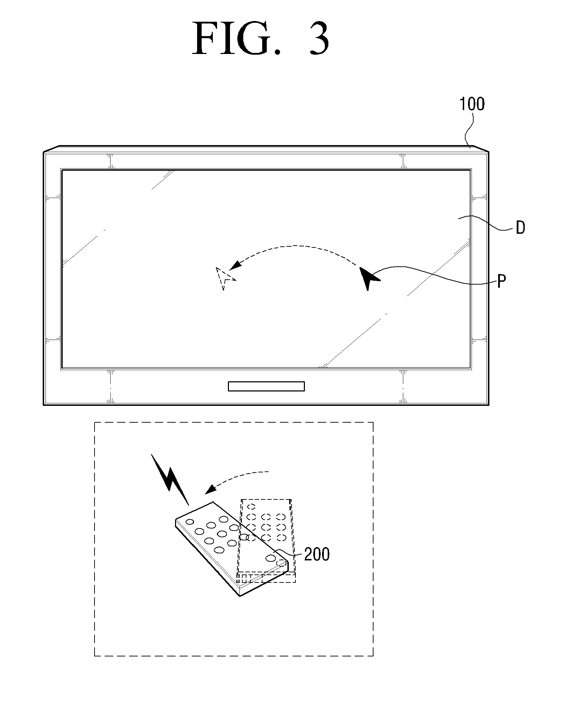

FIG. 3 illustrates the remote controller 200 in the case where the front of the remote controller 200 is moved in a left direction, while drawing a curved locus on a virtual hemisphere surface.

In short, a pointer P displayed on the display D moves according to a user's spatial manipulation of the remote controller 200. The movement of the remote controller 200 is distinct from that of a mouse for a personal computer (PC), which moves on a plane surface, while the front of the remote controller 200 moves in three-dimensional space.

If the front of the remote controller 200 is moved in space, the pointer P displayed on the display D may move in a direction identical to the direction in which the front of the remote controller 200 is moved. For example, if a user moves the front of the remote controller 200 in space in an upper direction, the pointer P may also be moved in an upper direction, and if a user moves the front of the remote controller 200 in space in an upper-left direction, the pointer P may also be moved in an upper-left direction.

Accordingly, the remote controller 200 may operate as a pointing device which is used to move the pointer P on the display D.

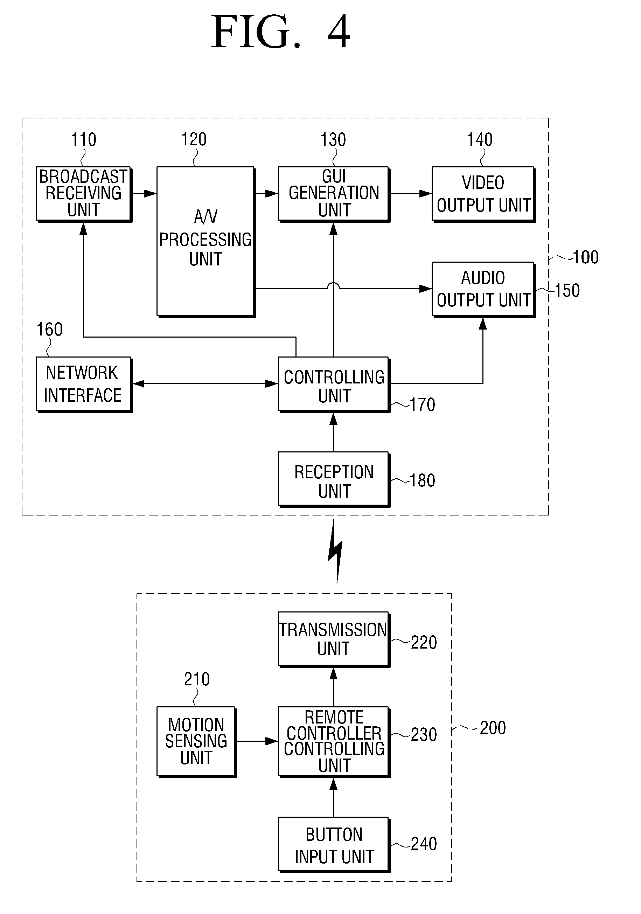

The IP-TV 100 and the remote controller 200 will now be explained in detail with reference to FIG. 4. FIG. 4 is a block diagram illustrating the IP-TV 100 and the remote controller 200 according to an exemplary embodiment.

Referring to FIG. 4, the remote controller 200 comprises a motion sensing unit 210, a transmission unit 220, a remote controller controlling unit 230, and a button input unit 240.

The motion sensing unit 210 senses the movement of, for example the front, of the remote controller 200, and transmits the sensed result to the remote controller controlling unit 230. The motion sensing unit 210 may be implemented using an inertial sensor, such as a gyro sensor, an acceleration sensor, and so on.

Alternatively, the motion sensing unit 210 may be implemented using a photographing means, which photographs two or more Infrared light sources provided on the IP-TV 100, and a video processing means, which analyzes positions of the Infrared light sources on a video photographed by the photographing means and senses the movement of the front of the remote controller 200.

The button input unit 240 may comprise a power button, channel buttons, volume buttons, a selection button, and so on.

The remote controller controlling unit 230 transmits information regarding the movement obtained sensed by the motion sensing unit 210, for example, the direction and distance of the movement, to the IP-TV 100 through the transmission unit 220. The remote controller controlling unit 230 also transmits information regarding the button which is input by a user using the button input unit 240 to the IP-TV 100 through the transmission unit 220.

The IP-TV 100 comprises a broadcast receiving unit 110, an audio/video (A/V) processing unit 120, a graphical user interface (GUI) generation unit 130, a video output unit 140, an audio output unit 150, a network interface 160, a controlling unit 170, and a reception unit 180.

The broadcast receiving unit 110 receives a broadcasting signal from a broadcasting source, for example a broadcasting station or a satellite, over wire or wirelessly, and tunes to the received broadcasting.

The A/V processing unit 120 performs signal processing on the broadcasting signal received by the broadcast receiving unit 110. For example, the signal processing may be video decoding, video scaling, audio decoding, and so on. The A/V processing unit 120 outputs a video signal to the GUI generation unit 130 and an audio signal to the audio output unit 150.

The GUI generation unit 130 generates a GUI, and adds the generated GUI to a video output from the A/V processing unit 120. The GUI generated by the GUI generation unit 130 includes, for example, a pointer.

The video output unit 140 displays a video having the GUI generated by the GUI generation unit 130 on the display D. The audio output unit 150 outputs audio output from the A/V processing unit 120 through, for example, a speaker.

The network interface 160 accesses a network, such as the Internet, and receives a web page.

The controlling unit 170 may be, for example a central processing unit (CPU), which controls the operations of the IP-TV 100, renders a web page received through the network interface 160, transmits the web page to the video output unit 140 through the GUI generation unit 130, and causes the web page to be displayed on the video output unit 140.

The controlling unit 170 analyzes a user command based on the signals indicating a user's manipulation received from the remote controller 200 through the reception unit 180, such as information regarding the movement of the front of the remote controller 200 and information regarding the pressed button, and controls operations of the IP-TV 100 according to the analyzed user command.

The controlling unit 170 analyzes information regarding the movement of the front of the remote controller 200 received through the reception unit 180, and controls the GUI generation unit 130 based on the analyzed movement information so that the pointer P is moved on the display D.

The controlling unit 170 refers to a gravity map in addition to the analyzed movement information when controlling the GUI generation unit 130 to move the pointer P.

The gravity map is used to automatically move a pointer in a specific area of the display D towards the center of the specific area. To automatically move the pointer P towards the center of the specific area, a locus of the automatically moving pointer P is drawn in a vector on the specific area and the area around the specific area.

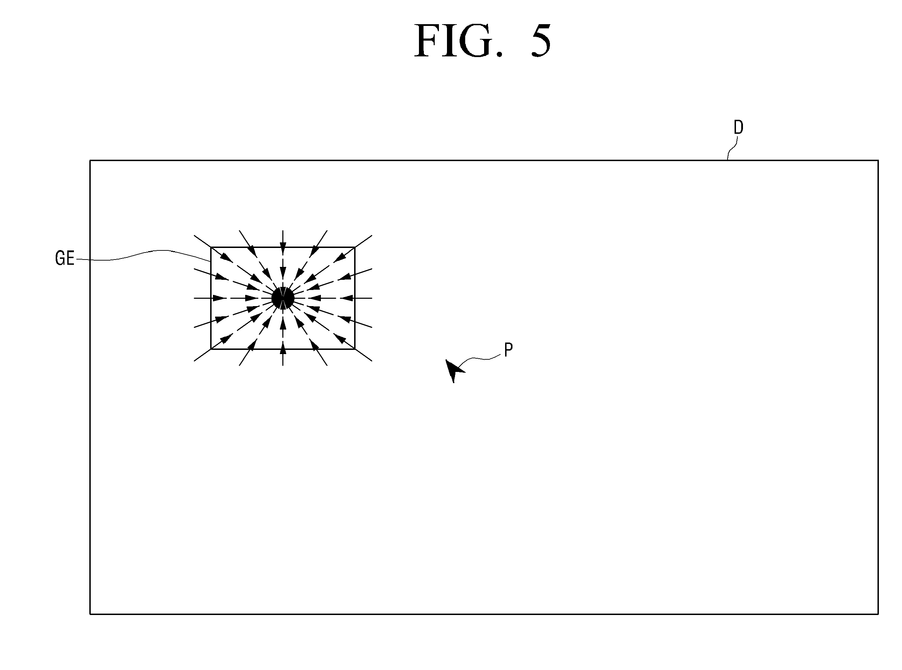

FIG. 5 illustrates a gravity map according to an exemplary embodiment. A single GUI element (GE) is illustrated on the gravity map of FIG. 5. The GUI element GE represents an element selectable by the pointer P among elements displayed on a screen. The number of GUI elements may be changeable as occasion demands.

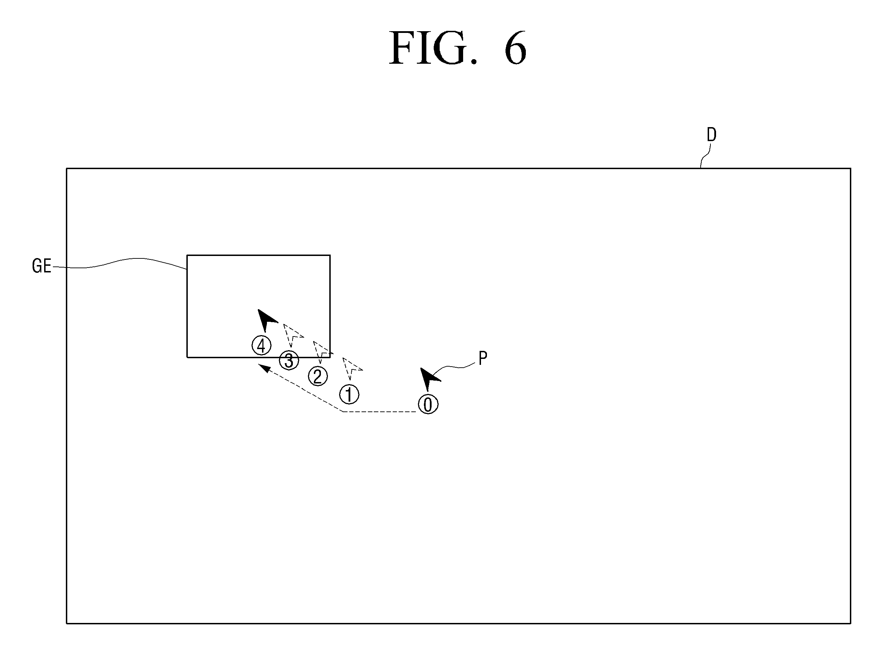

The pointer P approaching an area around the GUI element GE automatically moves towards the center of the GUI element GE according to the gravity map illustrated in FIG. 5. As illustrated in FIG. 6, if the pointer P moves from position ⊚ to position ① on the display D according to a user's manipulation of the remote control 200, the pointer P approaches an area around the GUI element GE. Once at position ①, based on the gravity map and without further manipulation of the remote control 200 by the user, the pointer P automatically moves in a direction indicated by positions ① → ② → ③ → ④, and thus the pointer P is positioned at the center of the GUI element GE on the display D.

A plurality of pointers P illustrated in FIG. 6 do not mean that the plurality of pointers P appear at the same time. The plurality of pointers P are to show the movement of the single pointer P, and only the single pointer P appears in the order of numbers marked below the pointers P.

Referring to FIG. 6, the pointer P is ultimately positioned at the center of the GUI element GE. In this situation, a user merely manipulates the pointer P to move from position ⊚ to position ① on the display D. The movement of ① → ② → ③ → ④ is automatically performed without a user's further manipulation. Accordingly, if the pointer P moves towards the GUI element GE, the pointer P may move automatically towards the center of the GUI element GE.

As described above, if the pointer P moves towards the center of the GUI element GE, a user may feel as if the pointer P moves automatically gravitates towards the center of the GUI element GE, which is enabled by the gravity map.

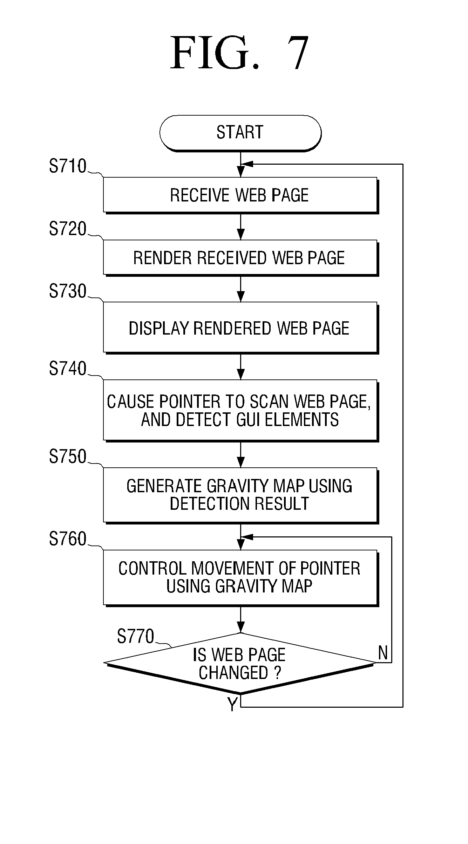

It has been described that the network interface 160 receives a web page. The controlling unit 170 generates a gravity map capable of being applied to graphical elements in the received web page, and controls the GUI generation unit 130 so that the pointer P is moved on the web page according to a user's manipulation and the gravity map, which will be explained below in detail with reference to FIG. 7.

FIG. 7 is a flowchart illustrating a method for providing a GUI for a web page using a pointer P, which looks as if the pointer P is moving by gravity to a user, according to an exemplary embodiment.

Referring to FIG. 7, if a web page requested by a user is received through the network interface 160 (S710), the controlling unit 170 renders the received web page (S720). The controlling unit 170 transfers the rendered web page to the video output unit 140 through the GUI generation unit 130, and causes the web page to be displayed on the display D (5730).

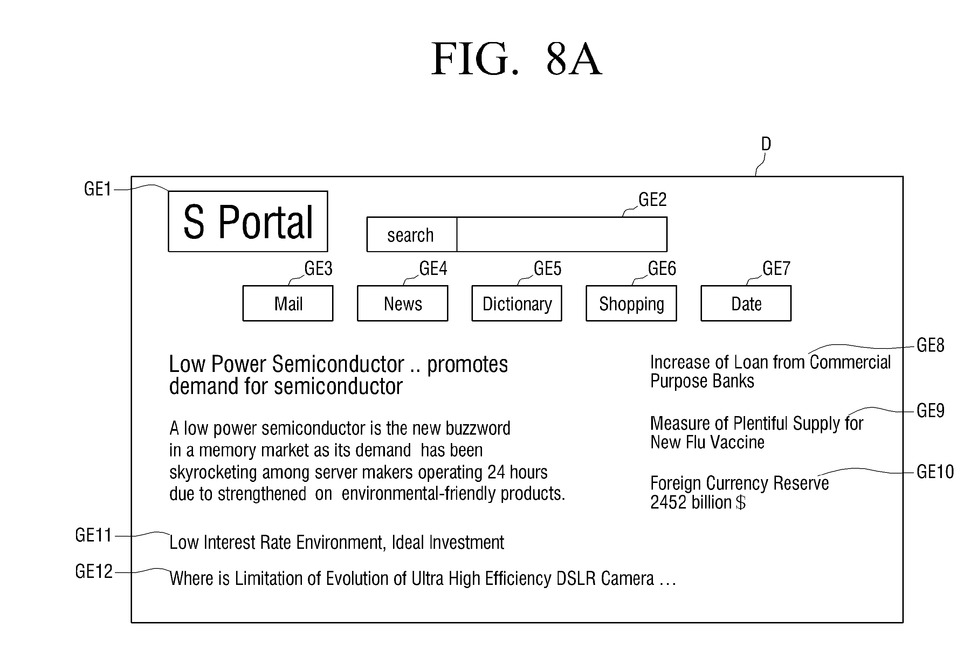

FIG. 8A illustrates the web page displayed in operation S730 according to an exemplary embodiment. Referring to FIG. 8A, GUI elements (GE 1 to GE 12) are displayed on the web page. The GUI elements may include a hyperlink, a graphic button, an input box, and so on.

The hyperlink is a GUI element which leads to a web page at a uniform resource locator (URL) in the hyperlink when the hyperlink is selected by the pointer P. In FIG. 8A, hyperlinks are textually illustrated as GE 8, GE 9, GE 10, GE 11, and GE 12 in FIG. 8A.

The hyperlink may also be illustrated in the form of a graphic button. Selecting the graphic button with the pointer P also leads to a web page at a URL in the hyperlink. The graphic button hyperlinks in FIG. 8A include GE 1, GE 3, GE 4, GE 5, GE 6, and GE 7 in FIG. 8A.

The input box is a GUI element which provides an area in which a user may input text, and includes GE 2 in FIG. 8A.

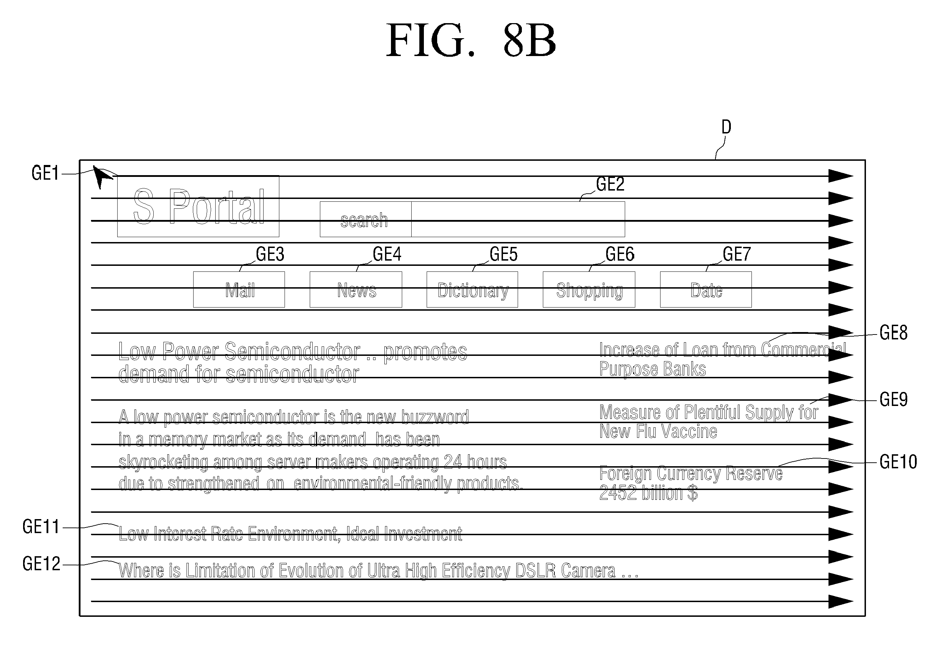

After operation S730, the controlling unit 170 scans the web page, for example by using the pointer P, and detects GUI elements (S740). FIG. 8B schematically illustrates the scanning process performed in operation S740. Referring to FIG. 8B, the scanning operation is performed from an upper left-most portion to a lower right-most portion, but a starting point, an ending point, and a direction of scanning operation may be changed as occasion demands.

After operation S740, the controlling unit 170 generates a gravity map using the GUI elements detected in operation S740 (S750). The operation of generating a gravity map in operation S750 may be performed in by positioning outlines of GUI elements detected in operation S740 on corresponding locations, and representing a locus of the automatic movement of the pointer P within the GUI elements and on areas around the GUI elements as a vector graphic.

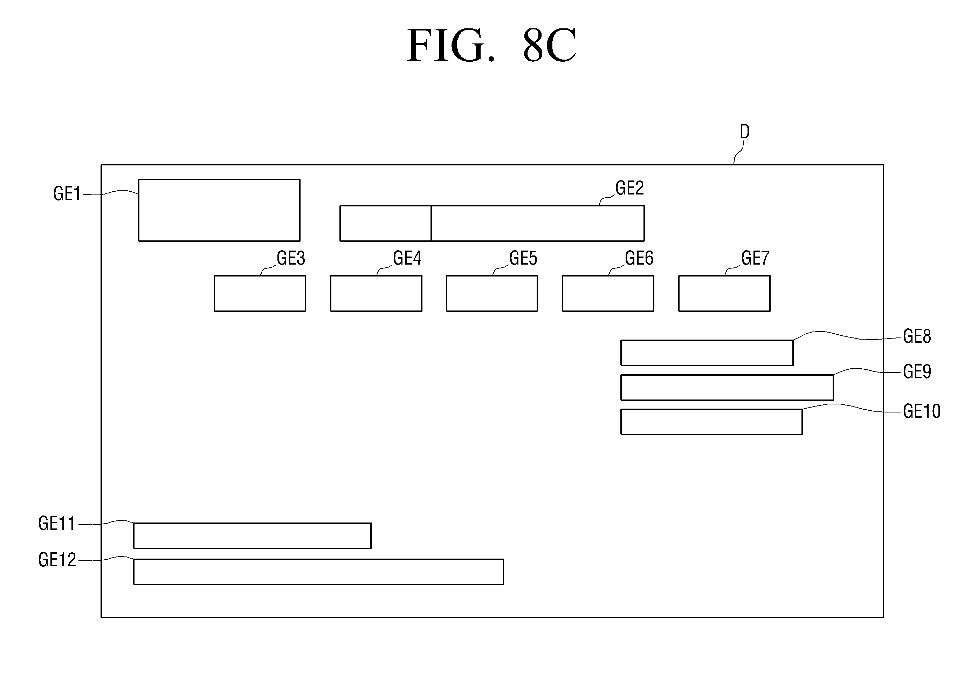

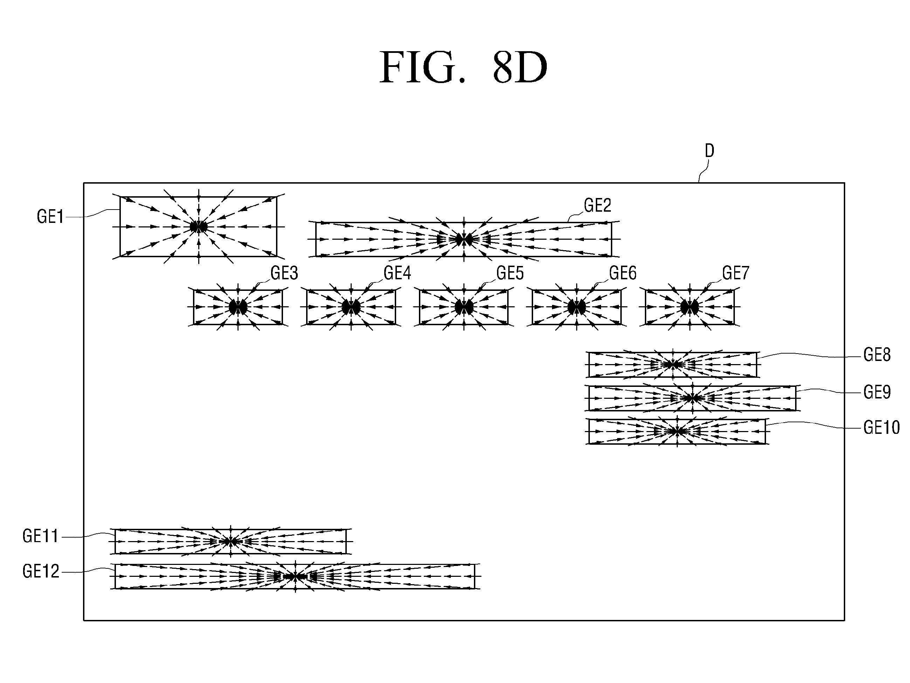

FIG. 8C illustrates the outlines of the detected GUI elements (GE 1 to GE 12) which are positioned on corresponding locations, and FIG. 8D illustrates the automatic movement of the pointer P within the GUI elements (GE 1 to GE 12) and on areas around the GUI elements as a vector graphic. That is, FIG. 8D represents a gravity map for the currently displayed web page.

The controlling unit 170 controls the movement of the pointer P using the gravity map generated in operation S750 (S760). Specifically, in operation S760, if the pointer P approaches the GUI element, the controlling unit 170 controls the GUI generation unit 130 to move the pointer P towards the center of the GUI element, and if the pointer P does not approach the GUI element, the controlling unit 170 controls the GUI generation unit 130 to move the pointer P according to a user's manipulation.

Operation S760 is repeated until there is need to change a web page by the process that a user selects a hyperlink or a graphic button using the pointer P to request another web page (S770-N). If it is necessary to change the web page by the above process (S770-N), operation S710 is repeated.

The method for providing a GUI for a web page using a pointer P, which looks as if moving by gravity, is described in detail with various exemplary embodiments.

A gravity map suitable for a web page is generated and used in the case of displaying the web page on a display D in the exemplary embodiments, but the web page is merely an example of a screen displayed on the display. Accordingly, even when screens such as a menu screen, an application execution screen, and a desktop screen other than the web page are displayed, the technical aspect of the present disclosure, which generates and uses a gravity map, may be applied to the screens.

The hyperlink, the graphic button, and the input box are merely examples of GUI elements, and thus the GUI element is not limited thereto. Any element capable of being selected on a display D may be a GUI element.

The gravity map is a map, which is referred to, to automatically move a pointer P to simulate the pointer gravitating to the center of a GUI element. The aspect of the present invention may be applied to maps other than the gravity map. That is, any map which is used to automatically move a pointer towards a specific location may be available. It is not necessary that the specific location is the center of a GUI element, and other locations may also be available.

A pointer P automatically moves when the pointer P approaches a GUI element in this exemplary embodiment, but this merely an exemplary embodiment. Alternatively, when a pointer moves into a GUI element, the pointer may also automatically move.
Further, if a pointer approaches two GUI elements, an area on which the pointer is positioned may be enlarged so that a user may easily manipulate the movement of the pointer.

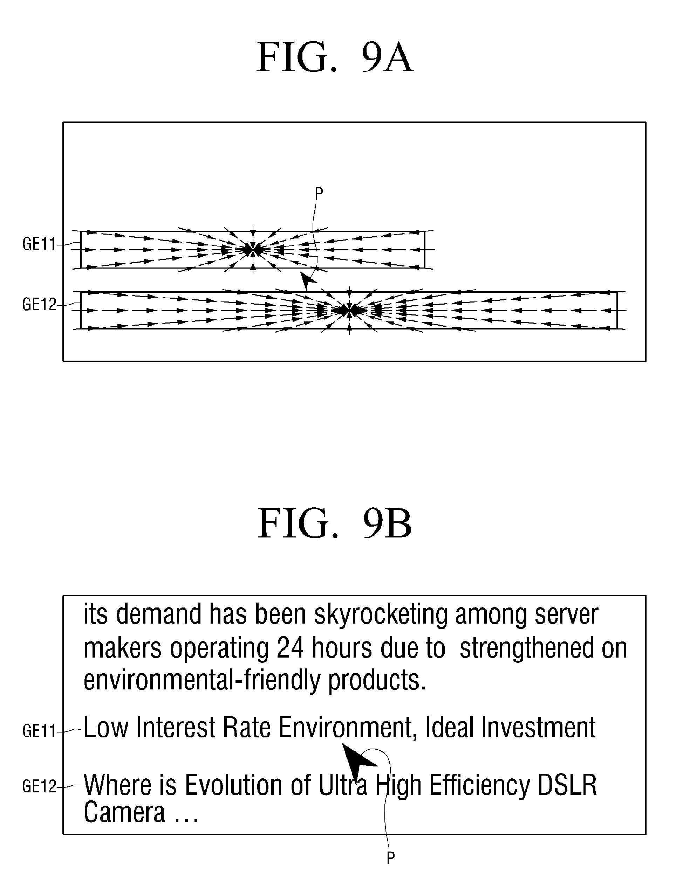

That is, if the pointer P approaches an area around two GUI elements (GE 11 and GE 12) as shown in FIG. 9A, the area of the display D on which the pointer P is positioned is displayed at an enlarged scale as shown in FIG. 9B.

Alternatively, if a pointer approaches an area around two GUI elements, the pointer may automatically move towards a GUI element having a center that is closest to the pointer, among two GUI elements.

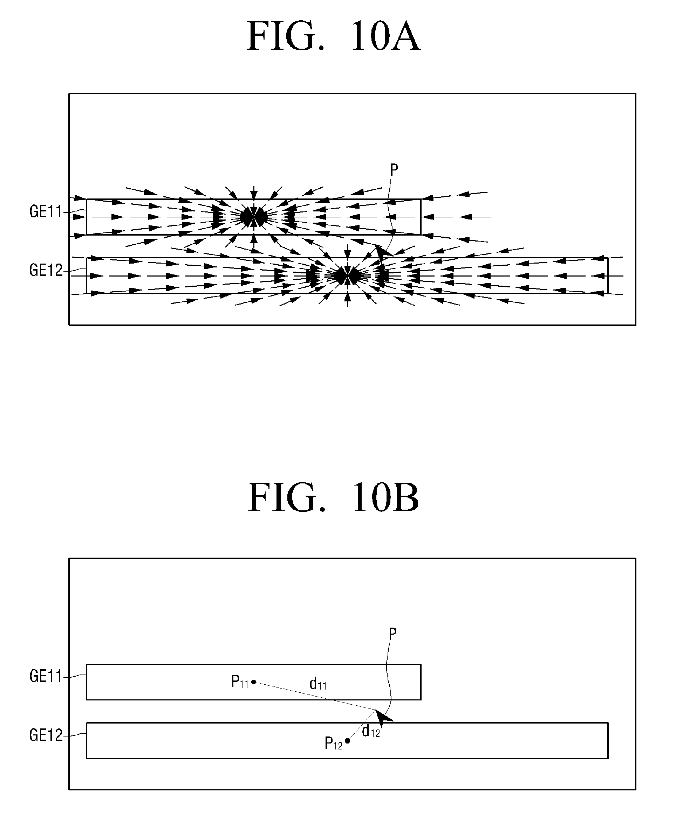

If a pointer approaches two GUI elements (GE 11 and GE 12) as shown in FIG. 10A, the pointer automatically moves towards the center of GE 12 since the distance (d₁₂) from the center of GE 12 (P₁₂) to the pointer P is less than the distance (d₁₁) from the center of GE 11 (P₁₁) to the pointer P, as shown in FIG. 10B

The IP-TV 100 described in the exemplary embodiments is merely an example of a display apparatus. Accordingly, the above aspects of the exemplary embodiments may be applied to any display apparatus which provides a GUI using a pointer other than the IP-TV In addition, the remote controller to move the pointer P may be replaced with a mouse, a touch pad, or a button input device according to the type of display apparatus.

The web page of the exemplary embodiments is an example of a screen which is generated with reference to information received from an external source and is displayed on the display. Accordingly, the exemplary embodiments may be applied to a screen which is generated with reference to received information and is displayed on the display, and may not be limited to the web page.

In addition, the web page of the exemplary embodiments is an example of an application screen which is generated to perform a specific task and is displayed on the display. Accordingly, the exemplary embodiments may be applied to an application screen which is generated to perform a specific task and is displayed on a display, and may not be limited to the web page.

As described above, according to the exemplary embodiments , a user may move a pointer to a desired GUI element more conveniently while enjoying excellent visual effect and entertainment, using a GUI in which a map for automatically moving a pointer into a GUI element is generated, and the movement of the pointer is controlled according to the generated map.

The foregoing exemplary embodiments are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing a graphical user interface (GUI), comprising:
determining that a pointer approaches an area on a screen of a display at which a GUI element, capable of being selected by the pointer on a screen which is generated with reference to information received from outside, is displayed; and
automatically moving the pointer to a specific location if the pointer approaches the area at which the GUI element is displayed.

2. The method as claimed in claim 1, further comprising:
detecting a GUI element selectable by the pointer displayed on the screen of the display; and
generating a map of the display containing a location on the screen at which the GUI element is displayed,
wherein the moving automatically moves the pointer to the specific location using the map if the pointer approaches the area at which the GUI element is displayed.

3. The method as claimed in claim 2, wherein the detecting and generating are performed when the screen displayed on the display is changed.

4. The method as claimed in claim 2 or 3, wherein the detecting scans the area of the screen displayed on the display using the pointer, and detects the GUI element selectable by the pointer.

5. The method as claimed in one of claims 1 to 4, wherein the screen displayed on the display comprises a web page, and the GUI element selectable by the pointer comprises at least one of a hyperlink, a graphic button, and an input box.

6. The method as claimed in one of claims 1 to 5, wherein the specific location is a center of the area at which the GUI element is displayed.

7. The method as claimed in one of claims 1 to 6, wherein the moving is performed when the pointer approaches an area around the area at which the GUI element is displayed.

8. The method as claimed in one of claims 1 to 7, wherein the GUI element comprises a first GUI element and a second GUI element that are displayed on the screen, and
wherein, if the pointer approaches an area around the area at which the first GUI element is displayed and an area around the area at which the second GUI element is displayed, the moving automatically moves the pointer to a specific location within one of the first GUI element and the second GUI element having a center that is closest to the pointer.

9. The method as claimed in one of claims 1 to 8, wherein the GUI element comprises a first GUI element and a second GUI element, and
wherein the method further comprises:
enlarging and displaying an area, on which the pointer is positioned, if the pointer approaches an area around the area at which the first GUI element is displayed and an area around the area at which the second GUI element is displayed.

10. The method as claimed in one of claims 1 to 9, wherein a command for moving the pointer is input according to movement of a pointing device in three-dimensional space by a user.

11. A display apparatus, comprising:
a display;
a graphical user interface (GUI) generation unit which generates a pointer and adds the pointer to a video to be displayed on the display; and
a controlling unit which controls the GUI generation unit to move the pointer to a specific location when the pointer approaches an area on a screen of the display at which a GUI element, capable of being selected by the pointer on a screen which is generated with reference to information received from outside, is displayed.

12. The display apparatus as claimed in claim 11, wherein the controlling unit detects a GUI element selectable by the pointer displayed on the screen of the display, and generates a map of the display containing a location on the screen at which the GUI element is displayed, and
wherein if the pointer approaches the area on which the GUI element is displayed, the controlling unit controls the GUI generation unit to automatically move the pointer to the specific location using the map.

13. The display apparatus as claimed in claim 12, wherein the controlling unit performs the operations of detecting the GUI element and generating the map when the screen displayed on the display is changed.

14. The display apparatus as claimed in claim 12 or 13, wherein the controlling unit scans the area of the screen displayed on the display using the pointer, and detects the GUI element selectable by the pointer.

15. The display apparatus as claimed in one of claims 11 to 14, wherein the screen displayed on the display comprises a web page, and the GUI element selectable by the pointer comprises at least one of a hyperlink, a graphic button, and an input box.
